Europäisches Patentamt

European Patent Office

Office européen des brevets

(19)

(11) Veröffentlichungsnummer: **0 062 198**
A2

(12) **EUROPÄISCHE PATENTANMELDUNG**

(21) Anmeldenummer: 82102264.7

(22) Anmeldetag: 19.03.82

(51) Int. Cl.³: **G 09 B 29/04**

(30) Priorität: 04.04.81 DE 3113686

(43) Veröffentlichungstag der Anmeldung: **13.10.82**
Patentblatt 82/41

(84) Benannte Vertragsstaaten: **AT BE CH DE FR GB IT LI LU NL**

(71) Anmelder: **Marold geb. Marold, Susanne,
Ostpreussenstrasse 1, D-6335 Lahnau 3 (DE)**

(72) Erfinder: **Marold geb. Marold, Susanne,
Ostpreussenstrasse 1, D-6335 Lahnau 3 (DE)**

(74) Vertreter: **Knefel, Siegfried, Dipl.-Math.,
Wertherstrasse 16 Postfach 1924, D-6330 Wetzlar (DE)**

(54) **Wanderkarte oder dergleichen mit Wegebeschreibung und dergleichen mit einer Hülle und einem Behälter.**

(57) Die Erfindung betrifft eine Karte, wie Wanderkarte, Radfahrkarte oder dergleichen, mit einer transparenten Schutzhülle, welche die Karte in ausgebreiteter Form eng anliegend umgibt, so daß Strecken- und Wegebeschreibungen, auch Beschreibungen von Sehenswürdigkeiten und dergleichen, welche sowohl auf der Vorder- als auch auf der Rückseite der Karte aufgedruckt sein können, lesbar sind. Für den Nichtgebrauch ist die Hülle mit eingelegter Karte zusammenlegbar, so daß sie in einer Anzugtasche oder zum postalischen Versand in einem Briefumschlag Platz findet. Die Hülle selbst gestattet darüber hinaus ein Auswechseln der Karten. Mehrere Karten und die Hülle lassen sich in einem übersichtlichen Behälter anordnen, aus dem die gerade gebrauchte Karte und die Hülle entnommen werden.

- 3 -

## Beschreibung

Die Erfindung betrifft eine Karte, wie Wanderkarte, Radfahrkarte, auch eine Karte für Skilanglauf und dergleichen mit einer Hülle und einem Behälter. Zum Wandern oder dergleichen verwendet man Karten, welche üblicherweise in einer Kartentasche angeordnet sind, aus der sie zur Kontrolle der Wegstrecke herausgenommen werden müssen oder in die sie geeignet geknickt eingelegt werden, so daß der Wanderweg durch ein Fenster eingesehen werden kann. Die Handhabung derartiger Wanderkarten ist umständlich, insbesondere dann, wenn sich beispielsweise auf der Rückseite der Karte eine Wegebeschreibung befindet, weil, um diese einzusehen, die Karte aus der Tasche herausgenommen werden muß.

Verwendet man deshalb eine Karte ohne eine derartige Tasche, dann faltet man diese zusammen und steckt sie in eine Anzugtasche, wo sie durch die Bewegung des Wanderers bedingt, Knickungen ausgesetzt ist. Hierdurch leidet die Haltbarkeit der Karte. Zum anderen ist die Karte bei der Einsicht ungeschützt, insbesondere gegen Witterungsunbilden, wie Regen, Schnee und dergleichen.

Aufgabe der Erfindung ist es, eine Karte mit Hülle und Behälter anzugeben, bei der die Wegstrecke zusammen mit einer genügend großen Wegebeschreibung, einer Beschreibung kulturhistorischer Stätten sowie besonderer Sehenswürdigkeiten und dergleichen ohne besondere Manipulation und ohne die Karten den Unbilden der Witterung auszusetzen, stets einsehbar ist.

Diese Aufgabe wird durch das kennzeichnende Merkmal des Anspruches 1 gelöst.

Gemäß der Erfindung sucht sich der Wanderer zu Hause die für ihn in Frage kommende Karte aus einem im Behälter angeord-

- 4 -

neten Kartenvorrat heraus und schiebt sie in die Hülle. Bei Nichtgebrauch klappt er die Seitenteile der Hülle zusammen, so daß die Karte und Hülle ein sehr kleines Format erhalten. Für die Benutzung werden die Seitenteile ausgeklappt, und die gesamte Karte einschließlich der Wegebeschreibung und dergleichen ist mit ihrer Vorder- und Rückseite für eine Einsichtnahme frei.

Eine solche Karte ist durch die Hülle stets gegen Witterungsunbilden geschützt, insbesondere wenn man die Karte so in die Hülle einschiebt, daß die Einschieböffnung nach unten weist, und sie liegt bei Gebrauch mit sämtlichen Angaben frei.

Dadurch, daß die Vorder- und Rückseite der Karte eingesehen werden können, erhält man sehr viel Platz für die eigentliche Karte und die Wegebeschreibung, so daß die erfindungsgemäße Karte mit Hülle einen großen Informationsinhalt aufweist.

In nicht benutztem Zustand zeigt die Hülle mit eingelegter Karte oder aber auch die Karte allein ein derart kleines Format, daß sie beispielsweise zum Versand in einen normalen Briefumschlag gesteckt werden kann, was beispielsweise für den Nachbezug weiterer Karten auf dem Postweg von Vorteil ist. Darüber hinaus läßt sich aber auch eine solche Karte mit Hülle leicht in einer Anzugtasche unterbringen.

Die Karte selbst kann beliebige Form aufweisen, also rund, rechteckig oder quadratisch ausgebildet sein. Die Hüllenform wird man dann der Kartenform anpassen. Auch die Form des Behälters kann entsprechend gewählt werden.

Weitere Einzelheiten der Erfindung können den Unteransprüchen sowie der nachfolgenden Zeichnung und deren Beschrei-

- 5 -

bung entnommen werden.

Auf der Zeichnung ist ein Ausführungsbeispiel der Erfindung dargestellt, und zwar zeigen:

| | |
|---|---|
| Fig. 1 | die Ansicht der Hülle; |
| Fig. 2 | die Draufsicht auf die Hülle der Fig. 1 mit eingelegter Karte; |
| Fig. 3 | die Hülle gemäß Fig. 1 mit eingelegter Karte; |
| Fig. 4 | die Rückseite der Fig. 3; |
| Fig. 5 | die Hülle in zusammengelegtem Zustand; |
| Fig. 6 | die Draufsicht auf die Fig. 5; |
| Fig. 7 | eine perspektivische Darstellung eines Behälters mit eingelegter Hülle und einem Kartensatz. |

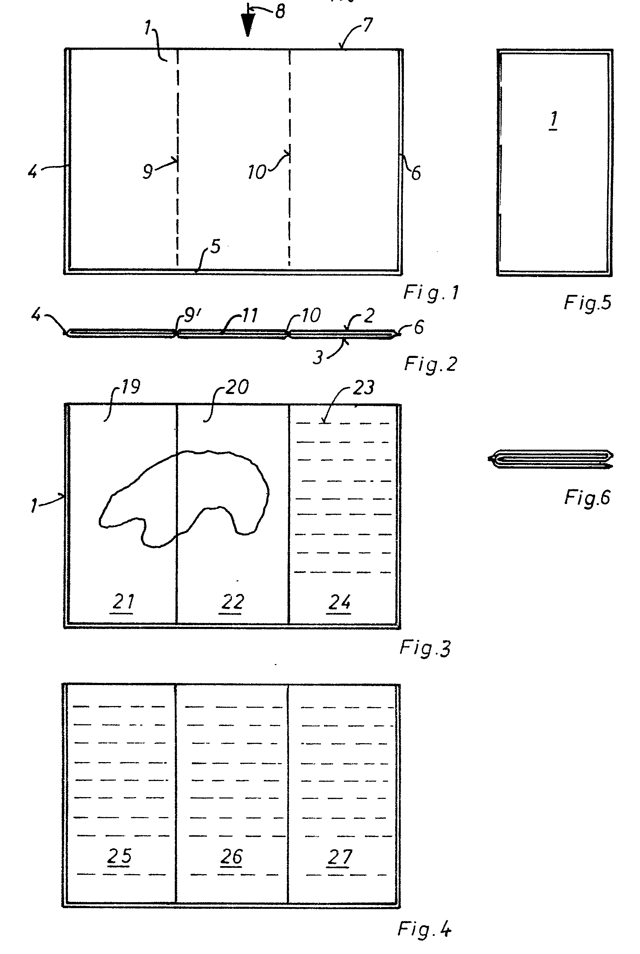

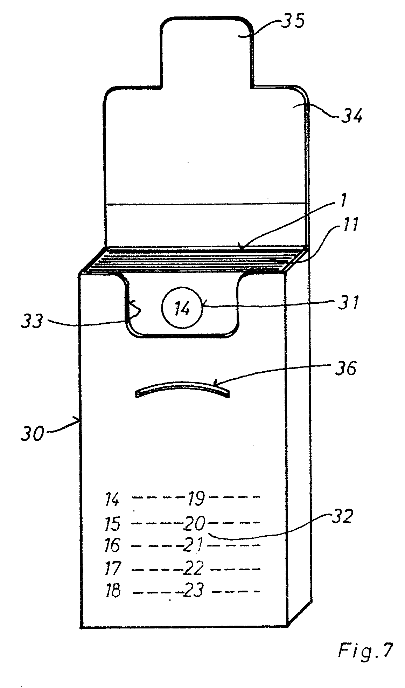

Gemäß Fig. 1 besteht die Hülle 1 aus zwei durchsichtigen, als Vorder- und Rückseite wirkende Flächenteile 2 und 3. Die Hülle besteht vorteilhaft aus Kunststoff, beispielsweise aus einem genügend dicken Cellophan (Handelsname). Die Ränder der Hülle 4, 5 und 6 sind zusammengeschweißt. Am Rand 7 liegen die Flächenteile 2 und 3 lose aufeinander, so daß in Richtung des Pfeiles 8 zwischen die Flächen 2 und 3 eine Karte 11 eingeschoben werden kann.

Die Flächenteile 2 und 3 weisen Perforationen 9 und 10 auf, längs denen die Hülle geknickt werden kann, so daß die Hülle 1 die in Fig. 5 dargestellte Form einnimmt.

Fig. 3 zeigt die Hülle 1 mit einer eingelegten Karte 11. Der eigentliche Kartenteil 19, 20, beispielsweise ein Ausschnitt aus einem Meßtischblatt im Maßstab 1:25000 füllt zwei Flächenteile 21 und 22 der Hülle aus. Die Wegebeschreibung 23 ist im Flächenteil 24 der Hülle angeordnet. Auf der Rückseite der Karte sind weitere Angaben über Wanderwege, Sehenswürdigkeiten, kulturhistorische Erläuterungen und dergleichen mehr aufgedruckt. Diese Angaben erscheinen in den Flächenteilen 25, 26 und 27. Da auch die Rückseite der Hülle durchsichtig ist, können auch diese Angaben ohne besondere Maßnahmen gelesen werden.

Im Nichtgebrauch wird die Hülle mit eingelegter Karte in die Form der Fig. 5 und 6 zusammengelegt.

Mehrere Einzelkarten 11 sowie eine gemäß den Fig. 5 und 6 zusammengelegte Hülle 1 sind gemäß Fig. 7 hintereinanderliegend in einer Tasche 30 anordbar. Jede der in der Tasche anordbaren Karte trägt eine Nummer 31. Die Nummern "14 bis 25" entsprechen den Zahlen der in der Tasche anzuordnenden Karten 11. Jede Nummer ist mit dem zugehörigen Wandergebiet als Inhaltsverzeichnis 32 auf der Tasche aufgeführt. Das durch den Einschnitt 33 gebildete Fenster wird im geschlossenen Zustand, d.h. wenn die Lasche 34 nach unten geklappt ist und ihre Zunge 35 durch einen entsprechenden Schlitz 36 gesteckt worden ist, verdeckt.

Kn/s
090582

Zentralvent
Landkreis Kreise
6 3 Wetzlar
· 63 - Postfach 1924
· · · (441) 46320

Susanne  M A R O L D ,   Ostpreußenstraße 1,   6555 Lahnau 5

Wanderkarte oder dergleichen  mit Wegebeschreibung
und dergleichen mit einer Hülle und einem Behälter

Patentansprüche

1. Wanderkarte oder dergleichen mit Wegebeschreibung und dergleichen mit einer Hülle und einem Behälter, gekennzeichnet durch eine allseitig durchsichtige Hülle (1) mit eng aufeinanderliegender Vorder- (2) und Rückseite (3), zwischen die die Karte (11) einschließlich der Wegebeschreibung (25) in vollständig ausgebreiteter Form einschiebbar ist, daß die Hülle (1) mit Hilfe wenigstens einer Knicklinie (9, 10) zusammenlegbar ist, derart, daß sie in zusammengelegtem Zustand in einen normalen Briefumschlag paßt, und daß die Hülle (1) zusammen mit weiteren Karten im zusammengelegten Zustand in einem gemeinsamen Behälter (Tasche (30)) anordbar ist.

2. Karte mit Hülle nach Anspruch 1, dadurch gekennzeichnet, daß die Hülle (1) aus einem durchsichtigen knickfestem Kunststoff besteht und die Vorder- (2) und Rückseite (3) an drei Seitenrändern (4, 5, 6) verschweißt sind.

3. Karte mit Hülle nach Anspruch 1, dadurch gekennzeichnet, daß die Karte und die Hülle wenigstens zwei sich deckende Felder (19 bis 24) bilden.

M P 517 EU

4. Karte mit Hülle nach Anspruch 3, dadurch gekennzeichnet, daß in wenigstens einem Feld (23, 24) eine Wegebeschreibung, Beschreibung von Sehenswürdigkeiten und dergleichen mehr angeordnet ist.

5. Karte mit Hülle nach Anspruch 3, dadurch gekennzeichnet, daß die Karte (11) und die Hülle (1) drei Felder (19, 20, 23; 21, 22, 24) aufweisen, von denen die Seitenfelder (19, 21; 23, 24) bei Nichtgebrauch übereinanderklappbar sind und daß in einem Seitenfeld (23, 24) und gegebenenfalls in die drei Felder (25, 26, 27) der Rückseite eine Wegebeschreibung, gegebenenfalls zusätzliche Wegebeschreibung und dergleichen angeordnet ist.

6. Karte mit Hülle oder dergleichen nach Anspruch 1, dadurch gekennzeichnet, daß die Knicklinien in der Hülle durch eingestanzte Perforationen (9, 10) gebildet sind.

7. Karte mit Hülle nach Anspruch 1, dadurch gekennzeichnet, daß der Behälter eine Verschlußlasche (35) aufweist, welche im geöffneten Zustand ein Fenster oder einen Einschnitt (33) freigibt, in dem eine Kartennummer (31) oder dergleichen erscheint und daß auf dem Behälter ein Inhaltsverzeichnis (32) angeordnet ist.

$\frac{1}{2}$

Fig. 1

Fig. 5

Fig. 2

Fig. 6

Fig. 3

Fig. 4

*Fig.7*